# DEMANDE DE BREVET EUROPEEN

(11) **EP 4 730 283 A1**
(43) Date de publication de la demande: **22.04.2026**
(21) Numéro de dépôt: 25203690.0
(22) Date de dépôt: 22.09.2025
(51) Int. Cl.: G06V 40/12, G06V 40/13

(54) **PROCÉDÉ ET DISPOSITIF DE DÉTERMINATION DU NOMBRE D EMPREINTES PALMAIRES PARTIELLES À ACQUÉRIR POUR RECONSTRUIRE L INTÉGRALITÉ D'UNE EMPREINTE PALMAIRE, PROCÉDÉ ET SYSTÈME D ACQUISITION CORRESPONDANTS**

(30) Priorité: 21.10.2024 FR 2411448
(71) Demandeur: Idemia Public Security France, 92400 Courbevoie (FR)
(72) Inventeur: TOURET, Olivier, 92400 Courbevoie (FR); KAZDAGHLI, Laurent, 92400 Courbevoie (FR)
(74) Mandataire: IPS

(57) **Abrégé**

La présente invention concerne un procédé de détermination du nombre d'images d'empreintes palmaires partielles à acquérir à l'aide d'un dispositif d'acquisition d'empreintes papillaires, ledit dispositif d'acquisition d'empreintes papillaires étant muni d'une surface d'acquisition dont la dimension est inférieure à la surface d'une paume représentative d'une population d'individus.

## Description

### DOMAINE DE L'INVENTION

L'invention concerne le domaine de l'imagerie biométrique, en particulier l'imagerie d'empreinte palmaire.

### ETAT DE LA TECHNIQUE

Il est courant de procéder à l'acquisition de dactylogrammes, généralement plus connus sous le terme général « d'empreintes papillaires » qui comprend « les empreintes digitales » et « les empreintes palmaires ». Les empreintes digitales sont des dessins que forment les traces laissées par les dermatoglyphes des doigts et les empreintes palmaires sont les dessins que forment les traces laissées par les dermatoglyphes des paumes de main. Les dermatoglyphes sont les sillons superficiels formés sur les paumes, les plantes et la pulpe des doigts par les crêtes dermiques et disposés en lignes ou spirales. Ils sont propres à chaque individu. Les dessins qu'ils forment en constituent une « carte d'identité » biométrique grâce à laquelle un individu peut être identifié. Le relevé des empreintes digitales est une pratique courante dans diverses démarches administratives auprès des institutions d'Etat et dans les opérations menées par les forces de l'ordre auprès d'un suspect ou d'un prévenu dans le cadre d'une infraction, d'un délit, d'un crime, ou d'une enquête judiciaire.

Il est connu de procéder à l'acquisition d'empreinte palmaire intégrale à l'aide de dispositifs munis d'une surface d'acquisition permettant l'acquisition d'une paume entière d'un individu en une seule acquisition, et ce quelle que soit la taille de la paume. Cependant, un tel dispositif est encombrant et peu transportable. En pratique, notamment pour les activités de terrain, un dispositif mobile de plus petite dimension est préféré car plus ergonomique. Un exemple de dispositif mobile courant sont les dispositifs dont les dimensions de la surface d'acquisition sont conformes à la norme type « FAP 60 » à savoir 76 mm x 81 mm.

Or, la largeur moyenne d'une paume de main d'un individu de sexe masculin est 89 mm. Un tel dispositif ne permet donc pas d'acquérir l'empreinte palmaire de l'intégralité d'une paume en une seule acquisition pour une très grande majorité d'individus.

Une solution consiste à procéder à l'acquisition d'empreintes palmaires partielles, puis à la reconstruction de l'intégralité de la paume à l'aide d'un traitement d'images.

EP 4 273 815 A1 décrit une méthode de reconstruction d'une paume à partir de ces images d'empreintes palmaires partielles présentant des zones de recouvrement.

Néanmoins, la complétude et la précision d'une telle reconstruction reposent principalement sur le recouvrement de la paume que les images d'empreintes partielles sont susceptibles de permettre lors de leur assemblage. Or, il est fréquent que le nombre d'images d'empreintes partielles soit insuffisant et/ou que ces images ne couvrent pas toutes les zones pertinentes de la paume. Face à ce problème, un opérateur humain qui procède à l'acquisition d'empreintes palmaires partielles d'un individu à l'aide d'un dispositif d'acquisition de petite dimension en vue de la reconstruction de l'intégralité d'une empreinte palmaire a tendance à multiplier, souvent inutilement, le nombre d'acquisitions, sans garantie que l'ensemble de la paume soit effectivement couvert. Il en résulte une perte de temps et un manque d'efficacité opérationnelle.

### EXPOSE DE L'INVENTION

L'invention permet d'améliorer la reconstitution d'empreintes palmaires intégrales à partir d'empreintes palmaires partielles en déterminant un nombre d'empreintes palmaires partielles à acquérir pour couvrir l'intégralité de la paume d'une main. Dans certains modes de réalisation, l'invention permet également de réduire le risque d'erreurs commises par un opérateur grâce à une séquence d'acquisition des empreintes partielles dans laquelle, à chaque acquisition, correspond à une position particulière de la paume d'un individu par rapport à la surface d'acquisition du dispositif d'acquisition.

Selon un premier aspect l'invention, il est fourni un procédé de détermination du nombre d'images d'empreintes palmaires partielles à acquérir à l'aide d'un dispositif d'acquisition d'empreintes papillaires, ledit dispositif d'acquisition d'empreintes papillaires étant muni d'une surface d'acquisition dont la dimension est inférieure à la surface d'une paume représentative d'une population d'individus, le procédé comprenant les étapes suivantes mises en œuvre par un calculateur :
a) Obtenir une image d'une empreinte papillaire d'un individu acquise à l'aide dudit dispositif d'acquisition ;
b) Mesurer, à partir de l'image d'empreinte papillaire, au moins une dimension géométrique de l'empreinte papillaire ;
c) Estimer au moins une dimension géométrique de la paume de l'individu à partir d'au moins une dimension géométrique de l'empreinte papillaire, par exemple à l'aide d'une ou plusieurs fonctions d'interpolation de préférence calculées sur des statistiques de différentes mesures sur plusieurs individus ;
d) Déterminer, à partir de l'au moins une dimension géométrique estimée de la paume de l'individu, un nombre N d'acquisition(s) d'image(s) I₁ ..., I_{N} de la paume de l'individu pour couvrir l'intégralité de la surface de la paume, chaque acquisition correspondant à une position P₁, ..., P_{N} de la paume de l'individu sur la surface d'acquisition du dispositif d'acquisition.

L'invention est avantageusement complétée par les caractéristiques suivantes, prises seules ou en une quelconque de leur combinaison techniquement possible :
- A l'étape a), l'image d'empreinte papillaire comprend au moins une empreinte digitale de l'individu, et à l'étape c) une première dimension géométrique de la paume de l'individu est la largeur de la paume, ladite largeur de la paume est estimée à l'aide d'une première fonction d'interpolation à partir de la dimension géométrique mesurée de l'empreinte papillaire, et une deuxième dimension géométrique de la paume de l'individu est la longueur de la paume, ladite longueur de la paume est estimée à l'aide d'une deuxième fonction d'interpolation à partir de la dimension géométrique mesurée de l'empreinte papillaire.
- La première fonction d'interpolation est une fonction d'interpolation de largeur de paumes d'une pluralité d'individus en fonction d'au moins une dimension géométrique de leurs empreintes digitales et la deuxième fonction d'interpolation est une fonction d'interpolation de longueur de paumes d'une pluralité d'individus en fonction d'une longueur de leur paume.
- A l'étape b) l'au moins une dimension géométrique mesurée de l'empreinte digitale est choisie parmi la largeur, la longueur, la surface de l'empreinte digitale ou leur combinaison.
- A l'étape a), l'image d'empreinte papillaire comprend la partie interdigitale de la paume de l'individu, à l'étape b) la largeur de la partie interdigitale est mesurée et à l'étape c), la largeur et la longueur de la paume sont respectivement estimées à l'aide d'une première fonction d'interpolation d'une largeur de paume et d'une deuxième fonction d'interpolation d'une longueur de paume en fonction de la largeur mesurée de la partie interdigitale.

A l'étape b), à partir de l'image d'empreinte papillaire prise à l'étape a), au moins une distance entre deux crêtes papillaires est mesurée ; et à l'étape c), la largeur et la longueur de la paume sont respectivement estimées à l'aide d'une première fonction d'interpolation d'une largeur et d'une deuxième fonction d'une longueur de paume en fonction de la distance mesurée entre deux crêtes papillaires.

L'étape d) comprend les sous-étape étapes suivantes :
- comparer la dimension géométrique estimée de la paume aux dimensions géométriques de la surface d'acquisition du dispositif d'acquisition ;
- déterminer une position P₁, ..., P_{N} pour chaque acquisition d'image I₁ ..., I_{N} de la paume de l'individu sur la surface d'acquisition du dispositif d'acquisition à partir de résultat de la comparaison.
- Si, la largeur estimée et la longueur estimée sont inférieures aux dimensions géométriques de la surface d'acquisition du dispositif d'acquisition, alors, le nombre N d'acquisition d'images est une seule image I1 associée à une position P1 centrée sur la surface d'acquisition du dispositif d'acquisition.
- Si, soit la longueur estimée soit la largeur estimée de la paume est supérieure aux dimensions géométriques de la surface d'acquisition du dispositif d'acquisition, alors :
   a) s'agissant de la longueur, le nombre N d'acquisition d'images est d'au moins deux images I1, I2 associées respectivement à une première position P1 correspondant à une partie supérieure de la paume, de préférence à au moins la moitié supérieure de la paume, et à une deuxième position P2 correspondant à une partie inférieure de la paume, de préférence à au moins la moitié inférieure de la paume ; soit
   b) s'agissant de la largeur, le nombre N d'acquisition d'images est d'au moins deux images I₁ I2 associées respectivement à une première position P1 correspondant à la moitié droite de la paume, et à une deuxième position P2 correspondant à la moitié gauche de la paume.
- Si la largeur estimée et la longueur estimée sont supérieures aux dimensions géométriques de la surface d'acquisition du dispositif d'acquisition, alors, le nombre N d'acquisition d'images est d'au moins quatre images I1 I2, I3, I4, associées respectivement à une première position P1 correspondant à la moitié supérieure de la paume, à une deuxième position P2 correspondant à la moitié inférieure de la paume, à une troisième position P3 correspondant à la moitié droite de la paume, et à une quatrième position P4 correspondant à la moitié gauche de la paume.

L'invention propose selon un deuxième aspect, un procédé d'obtention d'une image d'une empreinte, comprenant les étapes suivantes :
e) acquisition, à l'aide d'un dispositif d'acquisition d'empreintes papillaires muni d'une surface d'acquisition dont la dimension est inférieure à la surface d'une paume représentative d'une population d'individus, d'un nombre N d'acquisition(s) d'image(s) I₁ ..., I_{N} de la paume de l'individu pour couvrir l'intégralité de la surface de la paume, chaque acquisition correspondant à une position P₁, ..., P_{N} de la paume de l'individu sur la surface d'acquisition du dispositif d'acquisition obtenu au moyen d'un procédé selon le premier aspect de l'invention ;
f) vérification que les images acquises couvrent l'intégralité de la paume de l'individu ;
g) acquisition d'au moins une image corrective selon une position donnée si les images acquises ne couvrent pas l'intégralité de la paume ;
h) reconstruction de l'intégralité de la paume à partir des images acquises à l'étape e) et éventuellement à l'étape g).

L'invention selon le deuxième aspect est avantageusement complétée par les caractéristiques suivantes, prises seules ou en une quelconque de leur combinaison techniquement possible :
- La vérification comprend les étapes suivantes : reconstruire la paume à partir des images acquises ; calculer la largeur et/ou la longueur de la paume reconstruite ; comparer la largeur calculée et/ou la longueur calculée à une valeur de référence.
- A l'étape e), les images acquises comprennent au moins un bord de paume, la vérification comprenant les étapes suivantes : détecter, à partir des images acquises, les bords de paume ; vérifier la présence de l'intégralité des bords de paume ; au moins une image corrective étant acquise s'il manque un bord de paume.
- Le procédé selon le deuxième aspect comprend en outre les étapes suivantes : calculer la largeur et/ou la longueur à partir des bords de paume ; comparer la largeur calculée et/ou la longueur calculée à une valeur de référence, au moins une image corrective étant acquise en fonction du résultat de la comparaison.

L'invention selon un troisième aspect propose un dispositif d'acquisition d'empreintes papillaires comprenant un capteur, le capteur comprenant une surface d'acquisition inférieure à l'intégralité de la surface de la paume pour l'ensemble d'une population d'individus, le dispositif comprenant un calculateur configuré pour mettre en œuvre d'un procédé selon le deuxième aspect de l'invention.

### DESCRIPTION DES FIGURES

La figure 1 est une représentation schématique d'un exemple de dispositif mobile d'acquisition d'empreintes.
La figure 2 illustre des empreintes classées selon 11 classes C1-C11 de manière connue.
La figure 3 illustre des étapes d'un procédé de détermination d'une image d'une empreinte palmaire selon un mode de réalisation de l'invention.
La figure 4 illustre des étapes d'un procédé de détermination d'un nombre d'image(s) à acquérir selon un mode de réalisation de l'invention.
La figure 5 illustre une position de la main pour l'acquisition d'une empreinte dans un premier de mode de réalisation de l'invention.
La figure 6 illustre une position de la main pour l'acquisition d'une empreinte dans un deuxième mode de réalisation de l'invention.
La figure 7 illustre une position de la main pour l'acquisition d'une empreinte dans un premier de mode de réalisation de l'invention.
La figure 8 illustre la corrélation entre la largeur, en pixels, d'une empreinte d'un doigt d'une main d'individu avec la largeur, en pixels, de la paume de la main de l'individu.
La figure 9, la figure 10, la figure 11 et la figure 12 illustrent différentes positions de la main pour différentes acquisitions d'images de la paume de la main.

Sur l'ensemble des figures, les éléments similaires portent des références identiques.

### DESCRIPTION DETAILLEE DE L'INVENTION

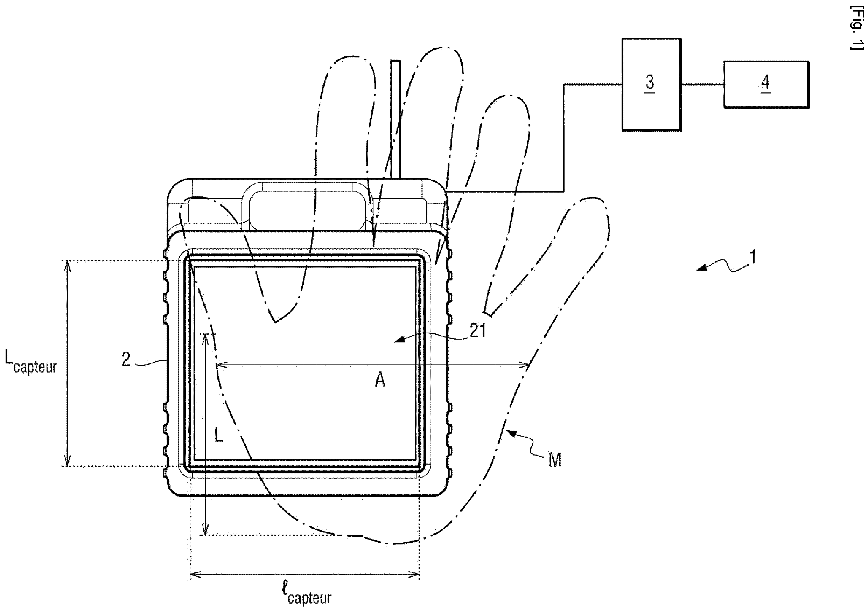

La figure 1 montre un dispositif mobile d'acquisition 1 d'empreintes papillaires par contact comprenant un capteur 2, un calculateur 3 configuré pour mettre en œuvre des étapes qui seront décrites ci-après et une mémoire 4 pour stocker des images d'empreintes et des instructions de code pour mettre en œuvre différentes étapes (voir ci-après). Le calculateur 3 et la mémoire 4 sont par exemple intégrés à un PC, une tablette ou un smartphone ou autre système pourvu d'une interface utilisateur. Le calculateur 3 peut être indépendant du capteur 2 ou bien intégré directement à celui-ci.

Le capteur 2 est de petite dimension, gage de la mobilité du dispositif. Il est conforme au standard FAP 60, et comprend une surface 21 d'acquisition de taille 3 x 3,2 inches, soit 76 x 81 mm.

La surface d'acquisition 21 du capteur est généralement rectangulaire. Un opérateur invite un individu à placer sa main M selon une position déterminée. Un ou plusieurs doigts, la main ou une partie de la main peuvent être apposés selon le type d'empreinte digitale ou palmaire qu'il est nécessaire d'acquérir.

Les empreintes digitales et palmaires peuvent être classés selon plusieurs classes d'appartenance, chacune des classes correspondant à une zone atomique particulière de la face palmaire de la main à laquelle ils correspondent. Il est entendu par « face palmaire » d'une main la face de la main sur laquelle est comprise la paume de la main, au contraire de la face dorsale. La face palmaire comprend la paume et l'ensemble des doigts, autrement dit le pouce, l'index, le majeur, l'annulaire, l'auriculaire, l'éminence thénar, le creux et l'éminence hypothénar. La paume d'une main est la partie de la face palmaire comprise entre le poignet et la base des doigts. Ces définitions correspondent à celles communément admises en anatomie

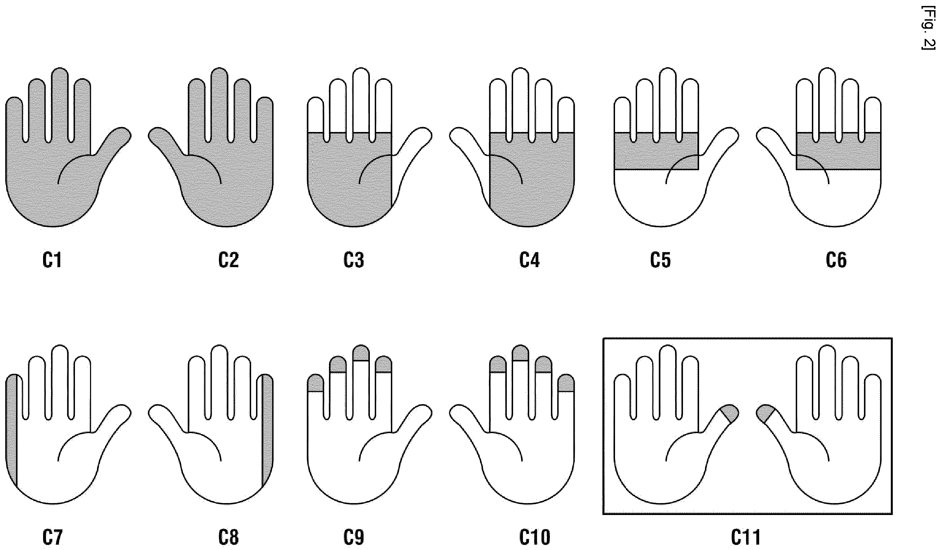

Dans la pratique, en référence à la figure 2, il peut être distingué, parmi les différents types de dactylogrammes, 11 classes C1-C11, d'appartenance correspondant à des zones anatomiques différentes de la face palmaire de la main et adaptées à un très grand nombre de besoins et cas d'usages : la main droite complète (C1), la main gauche complète (C2), la paume de la main droite (C3), la paume de la main gauche (C4), la zone interdigitales de la main droite (C5), la zone interdigitale de la main gauche (C6), la paume droite de l'écrivain (C7), la paume gauche de l'écrivain (C8), au moins deux, de préférence trois, de préférence quatre doigts de la main droite (C9), au moins deux, de préférence trois, de préférence quatre doigts de la main gauche (C10), les pouces de la main droite et de la main gauche (C11).

Le capteur 2 dont les dimensions de sa surface d'acquisition sont conformes à la norme FAP 60, à savoir 76 mm x 81 mm, ne permet pas l'acquisition d'une empreinte palmaire intégrale en une seule acquisition pour une majorité d'individu. La largeur moyenne d'une paume de main d'un individu de sexe masculin est 89 mm. En particulier, les dactylogrammes des classes C3 et C4 représentées sur la Fig. 2 ne peuvent être acquis en une seule acquisition pour la majorité des individus.

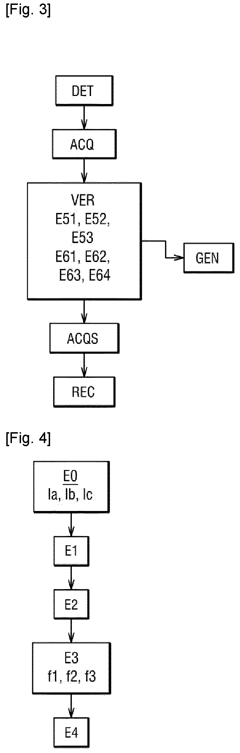

Comme illustré sur la figure 3, à l'aide du dispositif d'acquisition une détermination (étape DET) d'un nombre d'images d'empreintes palmaire partielles à acquérir est mise en œuvre, chaque image correspondant à une position de la paume de l'individu sur la surface d'acquisition 21 du capteur, pour permettre une acquisition intégrale de la paume de la main de l'individu.

De manière complémentaire, une étape d'acquisition (étape ACQ) de chaque image est mise en œuvre.

De manière complémentaire, une étape de vérification (étape VER) que la ou les image(s) acquise(s) permet(tent) bien de couvrir intégralement la paume entière est mise en œuvre et si la vérification n'est pas concluante alors des acquisitions correctives peuvent être requises et effectuées (étape DETS) ou une alerte invalidant les acquisitions peut être générée (étape GEN).

La figure 4 illustre l'ensemble des étapes composant la détermination (voir l'étape DET mentionnée en figure 3) d'un nombre N d'acquisition(s) d'images(s) de la paume de l'individu pour couvrir l'intégralité de la surface de la paume, chaque acquisition correspondant à une position P1, ..., PN de la paume de l'individu sur la surface d'acquisition 21 du dispositif d'acquisition 1 d'empreintes papillaires.

De manière complémentaire il s'agit aussi d'obtenir une ou plusieurs instruction(s) de positionnement de la main de l'individu sur la surface d'acquisition 21, instructions pouvant être visuelles ou sonores comme présenté ci-dessus.

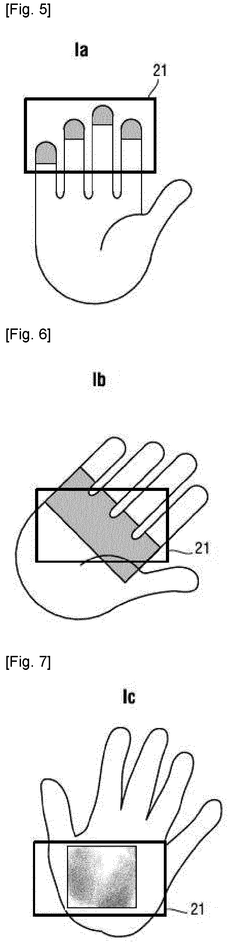

Ainsi, la détermination (étape DET) du nombre N d'acquisition(s) d'images(s) de la paume de l'individu pour couvrir l'intégralité de la surface de la paume comprend une étape préalable d'acquisition (étape E0) d'une image initiale (voir les images la, Ib, Ic sur les figures 5, 6 et 7 respectivement) d'empreinte papillaire de l'individu. Pour ce faire, un individu est invité à positionner sa main M par un opérateur sur la surface d'acquisition 21 du capteur 2. Cette image initiale (la, Ib, Ic) est reçue (étape E1) par le calculateur en vue d'être traitée. Lorsqu'on désignera une acquisition d'image il est à comprendre que chaque image est associée à une position particulière de la main de l'individu sur la surface d'acquisition 21 du capteur 2.

A partir de l'image initiale la, Ib, Ic, une dimension géométrique de l'empreinte papillaire de l'individu est mesurée (étape E2).

Puis à partir de la dimension géométrique mesurée, une estimation (étape E3) d'au moins une dimension géométrique de la paume de l'individu est effectuée à l'aide d'une ou plusieurs fonction(s) d'interpolation. Une dimension géométrique de la paume de l'individu peut être choisie parmi la longueur, la largeur et/ou la surface. Pour des raisons de simplification la paume est généralement supposée de forme rectangulaire.

En fonction de la dimension géométrique de la paume de l'individu ainsi estimée, le nombre N d'acquisition(s), et les positions de la main correspondant à ces N acquisitions, qui permettront de couvrir l'intégralité de la paume de l'individu sont déterminées (étape E4).

Chaque position est stockée dans la mémoire 4 d'un dispositif de traitement de données sous la forme d'instructions visuelles et/ou sonores en vue d'effectuer l'acquisition ultérieure de chaque image (étape ACQ).

### Premier mode de réalisation

Selon un premier mode de réalisation, en référence à la figure 5, l'image initiale la comprend au moins une empreinte digitale de l'individu, par exemple les empreintes des quatre doigts de la main gauche ou de la main droite. Dans l'exemple illustré sur la figure 5, l'individu positionne ses doigts sur la surface d'acquisition 21 du capteur 2 de sorte que les extrémités des quatre doigts (représentées noircies) soient positionnées sur le capteur, l'acquisition de l'image initiale (étape E0a) est alors effectuée.

Sur cette image initiale, au moins une dimension géométrique d'une ou plusieurs empreintes digitales est mesurée (étape E2). Une telle mesure s'effectue en pixels ou en unité dimensionnelle, ces deux grandeurs étant généralement proportionnelles. Une dimension géométrique de l'empreinte digitale est la largeur, la longueur ou la surface de l'empreinte digitale.

Ensuite, une estimation de la largeur de la paume est effectuée (étape E3) à partir de la dimension géométrique des empreintes mesurée précédemment.

Une telle estimation de la largeur est, par exemple, effectuée à partir de mesures de références donnant une dimension géométrique des empreintes digitales pour une largeur de paume d'individus de référence, ces mesures de référence étant stockées dans une mémoire 4.

Ainsi, pour une dimension géométrique d'empreintes mesurée, il s'agit de déterminer la dimension géométrique d'empreintes de référence la plus proche pour en déduire la largeur de la paume de la main de l'individu.

Pour ce faire, une première fonction d'interpolation f1 est obtenue à partir d'un ensemble de mesures des largeurs de paume d'une pluralité d'individus en fonction d'au moins une dimension géométrique de leurs empreintes digitales.

La première fonction d'interpolation f1 est, par exemple, obtenue à partir de d'une analyse de corrélation entre une dimension géométrique d'empreintes digitales et la largeur de paumes d'une population statistique d'individus de référence. La dimension géométrique des empreintes digitales peut être une dimension d'un doigt en particulier, ou d'une combinaison de tous les doigts ou d'une partie d'entre eux, avec calcul de moyennes, pondérées ou non.

De préférence, on utilise une première fonction d'interpolation f1 de la largeur A de la paume à partir la largeur d'une empreinte digitale d'un doigt pour obtenir la largeur de la paume. Ainsi, à partir de la mesure d'une largeur de l'empreinte d'un doigt de l'individu, on obtient une estimation de la largeur de sa paume (étape E3).

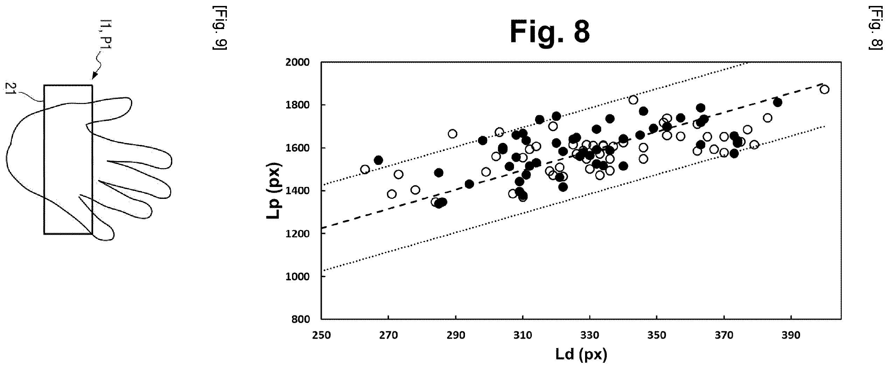

Un exemple de corrélation entre la largeur des empreintes digitales de différents doigts avec la largeur de la paume est illustré sur la figure 8. Sur cette figure, les dimensions sont exprimées en pixels. En abscisse, est représentée la largeur du majeur et, en ordonnée, est représentée la largeur de la paume pour chaque main de plusieurs individus. La ligne centrale représente la relation linéaire entre largeur de la paume et largeur d'une empreinte digitale d'un doigt (ratio doigt / paume constant). Les lignes supérieure et inférieure représentent les limites inférieures et supérieures d'un intervalle de confiance à 95% centré sur la ligne centrale. La quasi-totalité des points de mesure sont compris entre les lignes supérieure et inférieure.

De manière complémentaire, pour n'importe quel paramètre géométrique obtenu avec une première fonction f1 d'interpolation, celui-ci est accompagné d'un intervalle de confiance.

A partir de la largeur A de la paume, la longueur L de la paume, est déterminée à l'aide d'une deuxième fonction d'interpolation f2 (étape E3).

La deuxième fonction d'interpolation f2 est, par exemple, issue d'études anthropométriques indiquant notamment les 5^{e} et 95^{e} percentiles des mesures de largeurs et longueurs de paumes. Un exemple d'étude est décrit dans NASA MAN-SYSTEMS STANDARDS - 3 ANTHROPOMETRY AND BIOMECHANICS, Revision B, July 1995, Volume 1, Section 3.

Dans cet exemple, ,la deuxième fonction d'interpolation f2 permet d'établir une correspondance entre la largeur et la longueur de la paume de l'individu par exemple par une relation linéaire entre largeur et longueur de paume à partir des longueurs et largeurs aux 5^{e} et 95^{e} percentiles.

### Deuxième mode de réalisation

Selon un deuxième mode de réalisation, en référence à la figure 6, l'image initiale Ib d'empreinte papillaire comprend la partie interdigitale de la paume de l'individu, Cette image peut être acquise (étape E0b) en positionnant la partie interdigitale de la main M de l'individu selon la diagonale de la surface d'acquisition 21 du capteur 2 comme illustré sur la figure 6. La partie interdigitale correspond au haut de la paume à la base des doigts.

A titre d'exemple, avec un capteur 2 d'une diagonale de 111 mm, il est possible d'acquérir la largeur de la paume (mesurée sur la partie interdigitale) pour la quasi-totalité des individus.

En effet, d'après certaines études anthropométriques, notamment d'après celle citée précédemment, 95% des individus de sexe masculin ont une largeur de paume inférieure à 96 mm et 50% des individus de sexe masculin inférieure à 89mm (7 mm d'écart). Une diagonale de 111 mm (donc 15 mm de plus que 96 mm) est suffisante pour comprendre une très grande majorité d'individus.

A partir de l'image initiale Ib, la largeur de la partie interdigitale est mesurée (étape E2), par exemple à l'aide d'un traitement d'image permettant de mesurer la distance bord à bord de la paume. La largeur de la partie interdigitale correspond approximativement à la largeur de la paume.

De façon similaire à celle du premier mode de réalisation, la longueur L de la paume de l'individu est estimée à l'aide d'une fonction d'interpolation f3 d'une longueur de paume en fonction d'une largeur de la partie interdigitale.

### Troisième mode de réalisation

Selon un troisième mode de réalisation, l'image initiale d'empreinte papillaire comprend des crêtes papillaires. L'image initiale peut être une image d'une partie de la paume et/ou des doigts, comme illustré dans l'exemple de la figure 7. Dans cet exemple, l'image initiale peut être acquise (étape E0) en positionnant la main de l'individu pour que la partie centrale de la paume soit bien en contact avec la surface d'acquisition 21 du capteur 2. A titre d'exemple, la figure 7 montre la position de la main de l'individu pour acquérir (étape E0) une image Ic initiale montrant la partie centrale de la paume (en niveaux de gris).

A partir de l'image initiale Ic, au moins une distance entre deux crêtes papillaires est mesurée. De manière alternative, une moyenne de largeurs entre crêtes papillaires peut être utilisée pour une meilleure représentative de la statistique.

Puis à partir de la distance mesurée entre deux crêtes papillaires, il est possible d'en déduire la longueur et la largeur de la paume de l'individu à l'aide d'une fonction d'interpolation d'une largeur et d'une longueur de paume en fonction de la distance mesurée entre deux crêtes papillaires. Un exemple de fonction est décrit dans l'article Sharma et al. (2022). Is fingerprint ridge density influenced by hand dimensions? Acta Biomed. Cette fonction peut avantageusement être affinée à l'aide d'une campagne de mesures sur une population représentative d'individus.

### Détermination du nombre d'acquisition N (étape E4)

Une fois la largeur et la longueur de la paume obtenues il s'agit de déterminer le nombre N d'acquisition(s) nécessaires pour couvrir l'intégralité de sa surface, et éventuellement générer des instructions de guidages qui permettront de guider l'opérateur et l'individu dont les empreintes sont acquises (étape E4). Différents cas peuvent être distingués.

Cas 1) - Si la longueur L et la largeur A estimées de la paume sont inférieures aux dimensions géométriques de la surface d'acquisition 21 du capteur 2 (longueur de la surface d'acquisition L_{capteur} et largeur de la surface d'acquisition I_{capteur}) (par exemple 8,1 cm en longueur et 7,6 cm en largeur) alors le nombre N d'acquisition est une seule image I1 associée à une position P1 de la main centrée sur la surface d'acquisition (voir la figure 9).

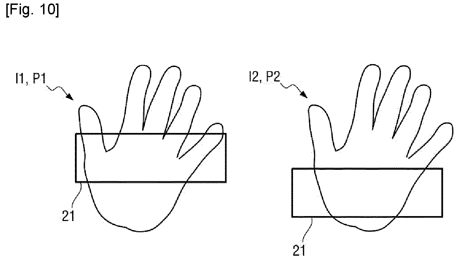

Cas 2) - Si la longueur L estimée de la paume est supérieure à la longueur L_{capteur} de la surface d'acquisition 21 du capteur 2 et si la largeur A estimée de la paume est inférieure à la largeur du capteur I_{capteur} alors le nombre N d'acquisition d'images est de deux images I1, I2 associées respectivement à une première position P1 correspondant à une partie supérieure de la paume, de préférence à au moins la moitié supérieure de la paume, et à une deuxième position P2 correspondant à une partie supérieure de la paume, de préférence à au moins la moitié inférieure de la paume (voir la figure 10).

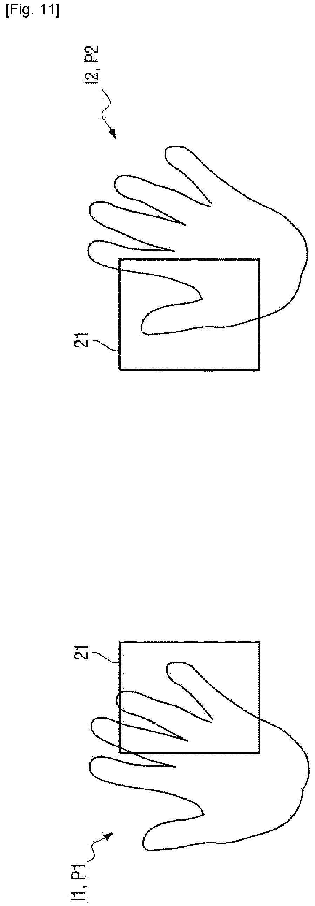

Cas 3) si la longueur L estimée est inférieure à la longueur L_{capteur} de la surface d'acquisition 21 du capteur 2 et si la largeur A de la paume estimée est supérieure à la largeur I_{capteur} de la surface d'acquisition 21 alors le nombre N d'acquisitions est de deux images I₁ I2 (voir la figure 11) associées respectivement à une première position P1 correspondant à la moitié gauche de la paume, une deuxième position P2 correspondant à la moitié droite de la paume.

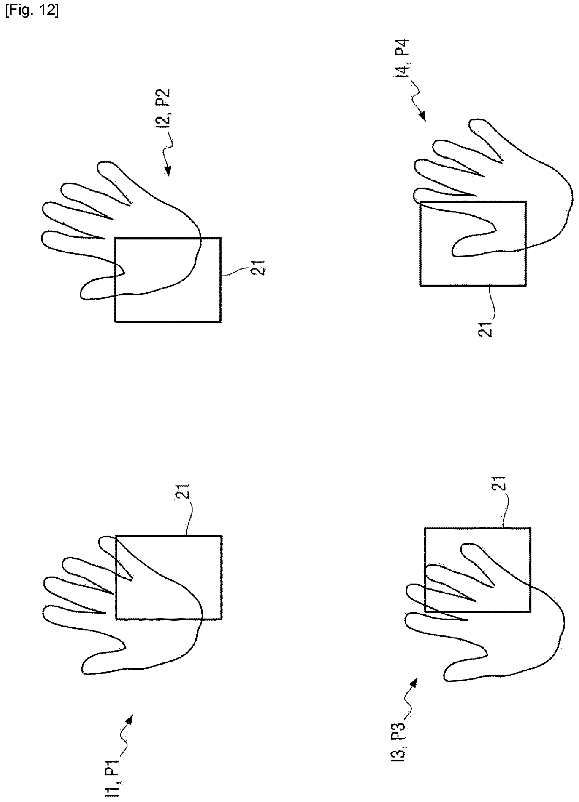

Cas 4) - Si la longueur L estimée de la paume est supérieure à la longueur L_{capteur} de la surface d'acquisition 21 du capteur 2 et si la largeur A estimée de la paume est supérieure à la largeur du capteur I_{capteur} alors le nombre N d'acquisition d'images est de quatre images I1 I2, I3, I4 associées respectivement à une première position P1 correspondant à la moitié supérieure de la paume à une deuxième position P2 correspondant à la moitié inférieure de la paume, une troisième position P3 correspondant à la moitié droite de la paume, une quatrième position P4 correspondant à la moitié gauche de la paume. Il faut donc N=4 acquisitions I₁, I2, I3, I4 en tout, une pour les secteurs de paume suivants (voir la figure 12) : haut-gauche, haut-droit, bas-gauche et bas-droit. Il à noter que différents ordres d'acquisition sont possibles mais il est en pratique préférable de ne pas commencer par deux secteurs situés en diagonale l'un de l'autre car le recouvrement des images est inférieur dans ce cas (à ce titre, le recouvrement permet de reconstruire la paume à partir des différentes acquisitions).

Selon les cas 1, 2 ou 4 images partielles selon différentes positions sont requises à partir des estimations des dimensions géométriques de la paume. Selon les cas, un faible nombre d'images est requis à comparer à un processus où un nombre bien supérieur serait requis pour être sûr de couvrir toute la paume.

### Obtention d'une image d'empreinte

Après avoir déterminé le nombre d'acquisition nécessaire pour couvrir intégralement une paume d'un individu, il est procédé à l'acquisition (étape ACQ) sur la surface d'acquisition 21 du capteur 2 de chaque image I₁, ..., l_{N} selon la position P₁, ..., P_{N} lui étant associée.

Selon certains modes de réalisation, le procédé comprend en outre une vérification (VER) que les images acquises couvrent l'intégralité de la paume puis une acquisition (ACQS) d'au moins une image corrective selon une position donnée si les images acquises ne couvrent pas l'intégralité de la paume. Enfin, une reconstruction (étape REC) de l'intégralité de la paume à partir des images acquises éventuellement complétées par au moins une image corrective est effectuée.

L'étape de vérification peut être mise en œuvre selon plusieurs possibilités.

Selon une première possibilité, la paume est d'abord reconstruite (étape E51) à partir des images acquises puis la largeur et/ou la longueur de la paume reconstruite sont calculées (étape E52). Ensuite, la largeur calculée et/ou la longueur calculée est/sont comparée(s) à une/des valeur(s) de référence (étape E53). Puis, il est procédé à l'acquisition (étape ACQS) d'au moins une image corrective selon une position donnée en fonction du résultat de la comparaison.

La reconstruction de l'intégralité de la paume à partir des images acquises peut être mises en œuvre selon les différentes méthodes, notamment selon la méthode décrite dans le document EP 4 273 815 A1. Une telle reconstruction (étape E51) comprend des étapes de recalage et de fusion des différentes images (pour le cas où au moins deux images pour deux positions différentes sont nécessaires).

Si la largeur et/ou la longueur de la paume reconstruite est/sont inférieure(s) à une valeur de référence (un seuil ou un intervalle de valeurs), il est probable que les images acquises sont d'une qualité insuffisante, en particulier la main n'a pas été bien positionnée correctement pour couvrir la surface de la paume (le même raisonnement peut se faire sur la longueur de la main). Un nombre d'acquisitions correctives (étape ACQS) est alors une ou deux acquisitions supplémentaires pour bien couvrir toute la largeur et/ou une ou deux acquisitions supplémentaires pour bien couvrir bien couvrir toute la longueur de la paume. Le dispositif d'acquisition peut être configuré pour alerter l'opérateur à l'aide d'un signal sonore ou visuel.

Selon une deuxième possibilité, si les images acquises comprennent au moins un bord de paume alors une détection (étape E61) du bord de la paume est effectuée à partir des images acquises afin de détecter l'ensemble des frontières de la paume (étape E62). S'il manque un bord de paume, alors il est procédé à l'acquisition (étape ACQS) d'au moins une image corrective.

Si l'on a détecté ces bordures, que l'on a une largeur et une longueur (donc une surface) supérieure une valeur de référence, et une forme cohérente avec celle d'une paume, on peut en déduire que l'on a bien l'ensemble de la paume. En revanche, s'il manque une bordure ou plus, et/ou que la longueur ou la largeur est inférieure à la limite basse de l'intervalle de confiance, alors au moins une acquisition d'une image corrective est effectuée pour détecter les bords correspondants.

En particulier, les acquisitions correctives consistent à positionner la partie de la paume correspondant au bord manquant vers le centre de la surface d'acquisition 21. Par exemple, s'il manque le bord gauche de la paume, c'est que la partie gauche de la paume a débordé de la partie gauche du capteur, donc on demande de positionner la partie gauche de la paume vers le centre du capteur 2, ou avantageusement entre le centre et la gauche du capteur de telle sorte que le bord gauche soit dans la surface d'acquisition 21. S'il manque le bord gauche et le bord haut, alors on demande de positionner la partie en haut et à gauche de la paume vers le centre ou au moins (et avantageusement) entre le centre et le quadrant haut-gauche.

Selon une troisième possibilité en complément de la deuxième possibilité, la largeur et/ou la longueur à partir des bords de paume sont calculées (étape E63) et la largeur calculée et/ou la longueur calculée sont comparées à des valeur de référence (étape E64). De telles valeurs de référence sont par exemple les limites inférieures et supérieures d'un intervalle de confiance associé aux fonctions d'interpolation (voir précédemment).

Si une largeur ou une longueur calculée est supérieure à des valeurs de référence, il est probable que la main ait été mal positionnée angulairement sur le capteur (« de travers »), la mesure de la diagonale ayant été considérée par erreur pour une mesure de la largeur ou de la longueur de la paume. Afin de limiter le risque d'erreur lors de la reconstruction de l'empreinte palmaire intégrale, il est avantageux de générer (étape GEN) un message d'alerte à destination de l'opérateur, lui indiquant de vérifier la position de la main et recommencer l'acquisition.

## Revendications

1. Procédé de détermination (DET) du nombre d'images d'empreintes palmaires partielles à acquérir à l'aide d'un dispositif d'acquisition (1) d'empreintes papillaires, ledit dispositif d'acquisition d'empreintes papillaires étant muni d'une surface d'acquisition (21) dont la dimension est inférieure à la surface d'une paume représentative d'une population d'individus, le procédé comprenant les étapes suivantes mises en œuvre par un calculateur (3) :
a) Obtenir (E1) une image d'une empreinte papillaire d'un individu acquise à l'aide dudit dispositif d'acquisition (1) ;
b) Mesurer (E2), à partir de l'image d'empreinte papillaire, au moins une dimension géométrique de l'empreinte papillaire ;
c) Estimer (E3) au moins une dimension géométrique de la paume de l'individu à partir d'au moins une dimension géométrique de l'empreinte papillaire ;
d) Déterminer (E4), à partir de l'au moins une dimension géométrique estimée de la paume de l'individu, un nombre N d'acquisition(s) d'image(s) I_{1,} ..., I_{N} de la paume de l'individu pour couvrir l'intégralité de la surface de la paume, chaque acquisition correspondant à une position P₁, ..., P_{N} de la paume de l'individu sur la surface d'acquisition (21) du dispositif d'acquisition (2).

2. Procédé selon la revendication 1, tel que l'image d'empreinte papillaire comprend au moins une empreinte digitale de l'individu, et à l'étape c) une première dimension géométrique de la paume de l'individu est la largeur de la paume, ladite largeur de la paume est estimée à l'aide d'une première fonction (f1) d'interpolation à partir de la dimension géométrique mesurée de l'empreinte papillaire, et une deuxième dimension géométrique de la paume de l'individu est la longueur de la paume, ladite longueur de la paume est estimée à l'aide d'une deuxième fonction (f2) d'interpolation à partir de la dimension géométrique mesurée de l'empreinte papillaire.

3. Procédé selon la revendication 2, tel que la première fonction d'interpolation est une fonction d'interpolation (f1) de largeur de paumes d'une pluralité d'individu en fonction d'au moins une dimension géométrique de leurs empreintes digitales et la deuxième fonction (f2) d'interpolation (f2) est une fonction d'interpolation de longueur de paumes d'une pluralité d'individus en fonction d'une longueur de leur paume.

4. Procédé selon l'une quelconque des revendications 2 à 3, tel que l'au moins une la dimension géométrique de l'empreinte digitale est choisie parmi la largeur (A), la longueur (L), la surface (S) de l'empreinte digitale ou leur combinaison.

5. Procédé selon la revendication 1, tel que l'image d'empreinte papillaire comprend la partie interdigitale de la paume de l'individu, et à l'étape b) la largeur de la partie interdigitale est mesurée et à l'étape c), la largeur et la longueur de la paume sont respectivement estimées à l'aide d'une première fonction d'interpolation d'une largeur de paume et d'une deuxième fonction d'interpolation d'une longueur de paume en fonction de la largeur mesurée de la partie interdigitale.

6. Procédé selon la revendication 1, tel que, à l'étape b), à partir de l'image d'empreinte papillaire prise à l'étape a) au moins une distance entre deux crêtes papillaires est mesurée ; et à l'étape c), la largeur et la longueur de la paume sont respectivement estimées à l'aide d'une première fonction (f3) d'interpolation d'une largeur et d'une deuxième fonction (f4) d'une longueur de paume en fonction de la distance mesurée entre deux crêtes papillaires.

7. Procédé selon l'une quelconque des revendications 1 à 6, tel que l'étape d) comprend les sous-étape étapes suivantes :
- comparer l'au moins une dimension géométrique estimée de la paume aux dimensions géométriques de la surface d'acquisition du dispositif d'acquisition ;
- déterminer une position P₁, ..., P_{N} pour chaque acquisition d'image I₁ ..., I_{N} de la paume de l'individu sur la surface d'acquisition du dispositif d'acquisition à partir de résultat de la comparaison.

8. Procédé selon la revendication 7, tel que si, la largeur estimée et la longueur estimée sont inférieures aux dimensions géométriques de la surface d'acquisition (21) du dispositif d'acquisition (2), alors, le nombre N d'acquisition d'images est une seule image I1 associée à une position P1 centrée sur la surface d'acquisition du dispositif d'acquisition.

9. Procédé selon la revendication 7, tel que si, soit la longueur estimée soit la largeur estimée de la paume est supérieure aux dimensions géométriques de la surface d'acquisition (21) du dispositif d'acquisition (2), alors
- s'agissant de la longueur, le nombre N d'acquisition d'images est d'au moins deux images I1, I2 associées respectivement à une première position P1 correspondant à une partie supérieure de la paume, de préférence à au moins la moitié supérieure de la paume, et à une deuxième position P2 correspondant à une partie inférieure de la paume, de préférence à au moins la moitié inférieure de la paume ; soit
- s'agissant de la largeur, le nombre N d'acquisition d'images est d'au moins deux images I1, I2 associées respectivement à une première position P1 correspondant à la moitié droite de la paume, et à une deuxième position P2 correspondant à la moitié gauche de la paume.

10. Procédé selon la revendication 7, tel que si la largeur estimée et la longueur estimée sont supérieures aux dimensions géométriques de la surface d'acquisition (21) du dispositif d'acquisition, alors, le nombre N d'acquisition d'images est d'au moins quatre images I1, I2, I3, I4, associées respectivement à une première position P1 correspondant à la moitié supérieure de la paume, à une deuxième position P2 correspondant à la moitié inférieure de la paume, à une troisième position P3 correspondant à la moitié droite de la paume, et à une quatrième position P4 correspondant à la moitié gauche de la paume.

11. Procédé d'obtention d'une image d'une empreinte papillaire de paume entière, comprenant les étapes suivantes :
e) acquisition (ACQ), à l'aide d'un dispositif d'acquisition (1) d'empreintes papillaires muni d'une surface d'acquisition (21) dont la dimension est inférieure à la surface d'une paume représentative d'une population d'individus, d'un nombre N d'acquisition(s) d'image(s) I₁ ..., I_{N} de la paume de l'individu pour couvrir l'intégralité de la surface de la paume, chaque acquisition correspondant à une position P₁, ..., P_{N} de la paume de l'individu sur la surface d'acquisition (21) du dispositif d'acquisition (2) obtenu au moyen d'un procédé selon l'une des revendications 1 à 10 ;
f) vérification (VER) que les images acquises couvrent l'intégralité de la paume de l'individu ;
g) acquisition (ACQS) d'au moins une image corrective selon une position donnée si les images acquises ne couvrent pas l'intégralité de la paume ;
h) reconstruction (REC) de l'intégralité de la paume à partir des images acquises à l'étape e) et éventuellement à l'étape g).

12. Procédé selon la revendication 11, dans lequel la vérification (VER) comprend les étapes suivantes :
- reconstruire (E51) la paume à partir des images acquises ;
- calculer (E52) la largeur et/ou la longueur de la paume reconstruite ;
- comparer (E53) la largeur calculée et/ou la longueur calculée à une valeur de référence.

13. Procédé selon la revendication 11, tel que, à l'étape e), les images acquises comprennent au moins un bord de paume, la vérification (VER) comprenant les étapes suivantes :
- détecter (E61), à partir des images acquises, les bords de paume ;
- vérifier (E62) la présence de l'intégralité des bords de paume ; au moins une image corrective étant acquise s'il manque un bord de paume.

14. Procédé selon la revendication 13, tel qu'il comprend en outre les étapes suivantes :
- calculer (E63) la largeur et/ou la longueur à partir des bords de paume ;
- comparer (E64) la largeur calculée et/ou la longueur calculée à au moins une valeur de référence, au moins une image corrective étant acquise en fonction du résultat de la comparaison.

15. Dispositif d'acquisition d'empreintes papillaires (1) comprenant un capteur (2), le capteur (2) comprenant une surface d'acquisition (21) inférieure à l'intégralité de la surface de la paume pour l'ensemble d'une population d'individus, le dispositif (1) comprenant un calculateur (3) configuré pour mettre en œuvre d'un procédé selon l'une quelconque des revendications 1 à 14.
